# EUROPÄISCHE PATENTANMELDUNG

(11) **EP 4 477 307 A1**
(43) Veröffentlichungstag der Anmeldung: **18.12.2024**
(21) Anmeldenummer: 23179233.4
(22) Anmeldetag: 14.06.2023
(51) Int. Cl.: B01J 19/00, B01J 19/24, B01J 4/00, C10K 1/06, C10B 3/02, C10J 3/84

(54) **REAKTOR ZUR ERZEUGUNG VON SYNTHESEGAS DURCH PARTIELLE OXIDATION MIT VERBESSERTER SYNTHESEGASKÜHLUNG**

(71) Anmelder: L'AIR LIQUIDE, SOCIETE ANONYME POUR L'ETUDE ET L'EXPLOITATION DES PROCEDES GEORGES CLAUDE, 75007 Paris (FR)
(72) Erfinder: Weigand, Peter, 60439 Frankfurt am Main (DE); Müller-Hagedorn, Matthias, 60388 Frankfurt am Main (DE); Walter, Stefan, 60439 Frankfurt am Main (DE); Kress, Michael, 60439 Frankfurt am Main (DE)
(74) Vertreter: Air Liquide

(57) **Zusammenfassung**

Die Erfindung betrifft einen Reaktor zur Erzeugung von Synthesegas durch partielle Oxidation eines kohlenstoffhaltigen Brennstoffs, umfassend einen Reaktionsraum und einen Abkühlraum, wobei ein gekühltes Gasleitrohr den Reaktionsraum und den Abkühlraum miteinander verbindet. Das Gasleitrohr verfügt über einen an den Reaktionsraum angrenzenden Gaseinlassbereich und einen an den Abkühlraum angrenzenden Gasauslassbereich. Erfindungsgemäß ist vorgesehen, dass das Gasleitrohr ein Innenrohr und ein Außenrohr aufweist, wodurch zwischen dem Innenrohr und dem Außenrohr ein Ringspalt ausgebildet wird, wobei der Ringspalt fluidisch mit einer Kühlmittelzuführung verbunden ist, so dass dieser mit Kühlmittel durchströmbar ist, und das Innenrohr im Gaseinlassbereich des Gasleitrohrs eine Öffnung zum Ringspalt aufweist, und im Bereich dieser Öffnung ein Leitblech angeordnet ist, so dass auf der Innenseite des Innenrohrs ein Flüssigkeitsfilm aus Kühlmittel erzeugbar ist, und im Gasauslassbereich des Gasleitrohrs eine Blende angeordnet ist, so dass innerhalb des Abkühlraums ein Spray aus Kühlmittel erzeugbar ist.

## Beschreibung

### Gebiet der Erfindung

Die Erfindung betrifft einen Reaktor zur Erzeugung von Synthesegas durch partielle Oxidation eines kohlenstoffhaltigen Brennstoffs. Die Erfindung zeichnet sich insbesondere durch eine verbesserte direkte Kühlung des Synthesegases im Reaktor aus.

### Stand der Technik

Die partielle Oxidation von kohlenstoffhaltigen gasförmigen, flüssigen oder festen Brennstoffen, insbesondere von Kohlenwasserstoffen, ist ein großtechnisch gängiges Verfahren zur Erzeugung von Wasserstoff-Kohlenmonoxid-Gemischen (Synthesegas). Bei der sogenannten Flugstromvergasung wird in einem Reaktionsraum der kohlenstoffhaltige Brennstoff zusammen mit einem sauerstoffhaltigen Oxidationsmittel und gegebenenfalls einem Moderator, zum Beispiel Wasserdampf und/oder Kohlendioxid, zu Synthesegas umgesetzt. Typische Bedingungen im Reaktor, insbesondere im Reaktionsraum, sind dabei hohe Temperaturen (1300 °C bis 1500 °C) und hohe Drücke (bis zu 100 bar).

In Prozessführungen, in welchen die Wärme in dem Synthesegas nicht in einem Abhitzekessel genutzt werden kann, muss das heiße Synthesegas vor einer weiteren Reinigung und Nutzung gekühlt werden, typischerweise auf eine Temperatur von weniger als 300 °C. Dies erfolgt in der Regel durch direkten Kontakt, also direkte Kühlung, mit einem Kühlmittel. Das Kühlmittel wird in diesem Zusammenhang häufig als Quenchmedium bezeichnet. Bei dem Quenchmedium handelt es sich in der Regel um Wasser, in manchen Fällen (zum Beispiel bei der Kohlevergasung oder Biomassevergasung) auch um organische Flüssigkeiten.

Diese Art der Kühlung, auch Quenchkühlung, ist in der einschlägigen Literatur beschrieben und dem Fachmann hinreichend bekannt. Grundsätzlich können drei Ausführungen dieser Art von Kühlung unterschieden werden, nämlich die Tauchquenche, die Freiquenche und das Quenchrohr.

Bei der Tauchquenche schließt sich typischerweise direkt am Ausgang des Reaktionsraums ein in das Kühlmittel abgetauchtes Gasleitrohr an, welches das heiße Gas aus dem Reaktionsraum in ein Wasserreservoir leitet, wo es bei der Durchströmung des Wasserreservoirs abgekühlt wird. Solche Systeme sind beispielsweise in der US 2010/0325957 A1, der US 2013/0189165 A1, und der WO 2017/102945 A1 beschrieben.

Bei der Freiquenche wird das heiße Gas aus dem Reaktionsraum über ein Leitrohr direkt in den Abkühlraum (Quenchraum) geleitet, in den über eine oder mehrere Düsen Wasser eingespritzt wird. Solche Systeme sind beispielsweise in der US 2007/0051043 A1 und in der US 2009/0007487 A1 beschrieben.

Beim Quenchrohr wird die Kühlflüssigkeit mit hoher Geschwindigkeit in die in einem Rohr geführte Gasströmung über ein Düsensystem eingeströmt, bevor dieses zur direkten Kühlung mit einem Kühlmittel in den aufgeweiteten Quenchraum strömt. Ein solches System ist in der DD 215 326 beschrieben.

### Beschreibung der Erfindung

Bei Verwendung einer Tauchquenche besteht der Nachteil, dass der Füllstand des Quenchwassers innerhalb des Abkühlraums des Reaktors, durch das das zu kühlende Gas geleitet wird, in einem engen Bereich kontrolliert werden muss. Ein zu hoher Füllstand kann leicht zu sich aufschaukelnden Druckschwankungen im Reaktorsystem führen. Bei zu niedrigem Füllstand besteht die Gefahr des Durchbruchs von ungekühltem Synthesegas mit einer dadurch möglichen Schädigung von Bauteilen.

Die Verwendung einer Freiquench-Anordnung birgt die Gefahr, dass bei Verstopfung einzelner Düsen Teilbereiche des Gasstroms nicht ausreichend gekühlt werden, was mit der Gefahr der Bildung von heißen Gassträhnen und dadurch einer Überhitzung und Schädigung von Bauteilen einhergehen kann.

Die Verwendung eines einfachen, nicht abgetauchten Gasleitrohres mit Wassereindüsung verringert zwar die Gefahren der Bildung von heißen Gassträhnen bei Verstopfung oder Strahlablenkung von einzelnen Düsen, hat jedoch bei höheren Betriebsdrücken den Nachteil, dass aufgrund der hohen Dichte und Viskosität des Synthesegases das Kühlmedium einen hohen Impuls benötigt, um bis in den Kern der Gasströmung eindringen zu können. Hierzu erforderlich sind ein hoher Differenzdruck und ein ausreichend großer Kühlmittelstrahldurchmesser, was der Anforderung nach der Bildung von möglichst kleinen Kühlmitteltropfen für eine schnelle und effektive Kühlung entgegensteht. Durch eine unzureichende Zerstäubung oder ein nicht ausreichendes Eindringen des Kühlmediums in den zu kühlenden Gasstrahl ist insbesondere bei hohen Drücken und transienten Betriebszuständen (Anfahren des Reaktors von niedrigem Druck auf Normallast) die sichere Abkühlung des Gases nicht gewährleistet.

Allgemein ist es daher eine Aufgabe der vorliegenden Erfindung, die vorgenannten Nachteile des Standes der Technik zumindest teilweise zu überwinden. Dies gilt insbesondere in Zusammenhang mit den für ein nicht abgetauchtes Gasleitrohr (Quenchrohr) beschriebenen Nachteile.

Insbesondere besteht eine Aufgabe der vorliegenden Erfindung darin, die Abkühlung des heißen Synthesegases durch direkte Kühlung mit einem Kühlmittel so zu realisieren, dass der gesamte abzukühlende Gasstrom erfasst wird, so dass sich keine heißen Synthesegassträhnen ausbilden können, was zu einer Überhitzung und Schädigung der drucktragenden Wand des Abkühlraums oder stromabwärts geschalteten Bauteilen führen könnte.

Weiterhin besteht eine Aufgabe der vorliegenden Erfindung darin, die Abkühlung des Synthesegases so zu gestalten, dass diese über einen weiten Betriebsbereich vom Anfahren des Reaktors unter Umgebungsbedingungen, bis zu voller Last bei hohem Druck, drastisch geänderter Strömungsgeschwindigkeit, Dichte und Zähigkeit der Medien, zuverlässig und sicher erfolgt.

Ein Beitrag zur mindestens teilweisen Lösung mindestens einer der obigen Aufgaben wird durch den unabhängigen Anspruch geleistet. Die abhängigen Ansprüche stellen bevorzugte Ausführungsformen bereit, die zur mindestens teilweisen Erfüllung mindestens einer der Aufgaben beitragen.

Die Ausdrücke "aufweisend", "umfassend" oder "beinhaltend" etc. schließen nicht aus, dass weitere Elemente, Inhaltsstoffe etc. enthalten sein können. Der unbestimmte Artikel "ein" schließt nicht aus, dass eine Mehrzahl vorhanden sein kann.

Die Aufgaben der Erfindung werden zumindest teilweise gelöst durch einen Reaktor zur Erzeugung von Synthesegas durch partielle Oxidation eines kohlenstoffhaltigen Brennstoffs, umfassend
(a) einen Reaktionsraum mit einem Brenner, einer Brennstoffzuführung und einer Oxidationsmittelzuführung, zur Erzeugung des Synthesegases aus dem Brennstoff und dem Oxidationsmittel im Reaktionsraum;
(b) einen Abkühlraum, aufweisend eine Kühlmittelzuführung, einen Synthesegasauslass, sowie einen Kühlmittelauslass, zur Kühlung des Synthesegases durch direkte Kühlung mit einem Kühlmittel;
(c) ein Gasleitrohr, welches den Reaktionsraum und den Abkühlraum miteinander verbindet, wobei
   das Gasleitrohr einen an den Reaktionsraum angrenzenden Gaseinlassbereich und einen an den Abkühlraum angrenzenden Gasauslassbereich aufweist,
wobei erfindungsgemäß vorgesehen ist, dass das Gasleitrohr ein Innenrohr und ein Außenrohr aufweist, wodurch zwischen dem Innenrohr und dem Außenrohr ein Ringspalt ausgebildet wird, wobei der Ringspalt fluidisch mit der Kühlmittelzuführung verbunden ist, so dass dieser mit Kühlmittel durchströmbar ist, und das Innenrohr im Gaseinlassbereich des Gasleitrohrs eine Öffnung zum Ringspalt aufweist, und im Bereich dieser Öffnung ein Leitblech angeordnet ist, so dass auf der Innenseite des Innenrohrs ein Flüssigkeitsfilm aus Kühlmittel erzeugbar ist, und im Gasauslassbereich des Gasleitrohrs eine Blende angeordnet ist, so dass innerhalb des Abkühlraums ein Spray aus Kühlmittel erzeugbar ist.

Gemäß der Erfindung wird die Strömung des heißen Synthesegases nach Austritt aus dem Reaktionsraum zunächst durch ein gekühltes Gasleitrohr geführt. Das Gasleitrohr kann auch als Quenchrohr bezeichnet werden. Das Gasleitrohr ist als doppelwandiges System mit Innenrohr und Außenrohr ausgeführt, wodurch es einen Ringspalt ausbildet. Der Ringspalt ist in Fluidverbindung mit der Kühlmittelzuführung, wodurch das von Synthesegas durchströmte Volumen des Gasleitrohrs gekühlt wird. Das Innenrohr verfügt im Gaseinlassbereich des Gasleitrohrs über eine Öffnung zum Ringspalt, wodurch eine fluidische Verbindung zwischen dem Ringspalt und dem Innenrohr, insbesondere dem Innenraum des Innenrohrs und/oder der Innenseite des Innenrohrs, ausgebildet wird. Es können auch mehrere solcher Öffnungen vorhanden sein.

Im Bereich der Öffnung des Ringspalts zur Innenseite des Innenrohrs ist ein Leitblech angeordnet. Durch das Leitblech wird das aus der Öffnung austretende Kühlmittel so umgelenkt, dass auf der Innenseite des Innerohrs ein Flüssigkeitsfilm ausbildbar ist. Dadurch wird das Gasleitrohr zusätzlich auf seiner Innenseite gekühlt und dadurch vor einer Überhitzung geschützt. Weiterhin bietet die Ausbildung eines Wasserfilms auf der Innenseite des Gasleitrohres durch kontinuierliche Strömung auf der Innenseite des Innenrohrs einen effektiven Schutz vor möglichen Ablagerungen.

Ferner ist im Gasauslassbereich des Gasleitrohres eine Blende angeordnet. Durch die Blende wird die durchströmbare Querschnittsfläche des Gasleitrohres, also der Strömungsquerschnitt des Gasleitrohrs, im Bereich des Gasauslassbereichs verringert. Dies führt zu Turbulenzen im Gasauslassbereich des Gasleitrohres, insbesondere im Bereich der Blende, wodurch das Kühlmittel von dem strömenden Synthesegas zerstäubt wird, und dadurch innerhalb des Abkühlraums ein Spray aus Kühlmittel ausgebildet wird. Die Ausbildung dieses Kühlmittelsprays führt zu einer innigen Vermischung des heißen Gasstroms mit dem Kühlmittel. Dadurch ist sichergestellt, dass der vollständige Synthesegasstrom erfasst und abgekühlt wird.

Das erfindungsgemäße Abkühlsystem des Reaktors bietet ferner den Vorteil, dass bezüglich des Kühlmittels kein hoher Druck für eine Eindüsung erforderlich ist. Da das System grundsätzlich ohne Düsen ausgeführt werden kann, ist die Gefahr einer (teilweisen) Verstopfung der Kühlmittelzufuhr und einer dadurch verminderten Kühlung unter Ausbildung heißer Synthesegassträhnen stark gemindert.

Der erfindungsgemäße Reaktor ist zur Erzeugung von Synthesegas durch partielle Oxidation eines kohlenstoffhaltigen Brennstoffs eingerichtet. Bei dem kohlenstoffhaltigen Brennstoff kann es sich um jeden gasförmigen, flüssigen oder festen Brennstoff handeln, der zur Synthesegaserzeugung durch partielle Oxidation geeignet ist. Gemäß einer Ausführungsform ist der Reaktorfür eine Flugstromvergasung konfiguriert. Vorzugsweise handelt es sich bei dem kohlenstoffhaltigen Brennstoff um einen kohlenwasserstoffhaltigen Brennstoff. Das Oxidationsmittel enthält vorzugsweise Sauerstoff. Beispiele für geeignete Oxidationsmittel sind Luft, mit Sauerstoff angereicherte Luft, oder reiner Sauerstoff. Das erzeugte Synthesegas enthält zumindest Wasserstoff und Kohlenmonoxid, sowie in der Regel Kohlendioxid als weiteres Produkt der Synthesegasbildungsreaktion.

Der Reaktionsraum des Reaktors ist für die eigentliche partielle Oxidation konfiguriert. Typische Temperaturen, bei welchen die partielle Oxidation abläuft, sind 1300 °C bis 1500 °C. Der Druck im Reaktionsraum kann bis zu 100 bar betragen.

Entsprechend verfügt der Reaktionsraum über zumindest einen Brenner. Ferner verfügt der Reaktionsraum über eine Brennstoffzuführung, welche für die Zuführung von Brennstoff in den Reaktionsraum des Reaktors und/oder zu dem mindestens einen Brenner eingerichtet ist. Ferner verfügt der Reaktionsraum über eine Oxidationsmittelzuführung, welche für die Zuführung von Oxidationsmittel in den Reaktionsraum des Reaktors und/oder zu dem mindestens einen Brenner eingerichtet ist.

Der Abkühlraum des Reaktors ist für die Abkühlung des im Reaktionsraum erzeugten heißen Synthesegases eingerichtet. Die Abkühlung des heißen Synthesegases erfolgt dabei durch direkte Kühlung des Synthesegases, das heißt durch direkte Wärmeübertragung vom Synthesegas auf das Kühlmittel durch Vermischen dieser beiden Medien und zumindest teilweise Verdampfung des Kühlmediums. Diese direkte Kühlung ist von einer indirekten Kühlung, wie beispielsweise in einem Wärmeübertrager, zu unterscheiden.

Der Abkühlraum weist eine Kühlmittelzuführung auf. Die Kühlmittelzuführung ist zum Zuführen von Kühlmittel zum Abkühlraum des Reaktors eingerichtet. Bevor das Kühlmittel in den Abkühlraum des Reaktors gelangt, durchströmt es zunächst den Ringspalt des Gasleitrohres und die Innenseite des Innenrohrs des Gasleitrohrs. Die Kühlmittelzuführung ist vorzugsweise zumindest teilweise innerhalb des Abkühlraums angeordnet, erstreckt sich somit zumindest teilweise durch den Abkühlraum hindurch. Bei der Kühlmittelzuführung handelt es sich vorzugsweise um eine rohrförmige Zuführung.

Der Abkühlraum weist ferner einen Synthesegasauslass auf. Der Synthesegasauslass ist zum Abführen des abgekühlten Synthesegas-Kühlmittel-Gemischs aus dem Abkühlraum des Reaktors eingerichtet. Unter Synthesegas-Kühlmittel-Gemisch wird in diesem Zusammenhang eine Mischung aus abgekühltem Synthesegas und verdampftem Kühlmittel verstanden. Ferner kann das vorgenannte Gemisch einen Anteil an Moderatordampf enthalten, welcher zur thermischen Steuerung der Reaktion in den Reaktionsraum eingebracht wurde. Bei dem Synthesegasauslass handelt es sich vorzugsweise um eine rohrförmige Abführung. Der Synthesegasauslass kann auch als Kaltgasauslass bezeichnet werden.

Der Abkühlraum verfügt weiterhin über einen Kühlmittelauslass. Der Kühlmittelauslass ist zum Abführen des überschüssigen Kühlmittels aus dem Abkühlraum des Reaktors eingerichtet. Überschüssiges flüssiges Kühlmittel, welches den Reaktor nicht gasförmig zusammen mit dem abgekühlten Synthesegas über den Synthesegasauslass verlässt, wird somit über den Kühlmittelauslass aus dem Reaktor ausgeleitet. Bei dem Kühlmittelauslass handelt es sich vorzugsweise um eine rohrförmige Abführung. Vorzugsweise ist der Kühlmittelauslass im Sumpfbereich des Abkühlraums angeordnet. Im Sumpfbereich des Abkühlraums kann sich überschüssiges Kühlmittel sammeln. Der Füllstand des überschüssigen Kühlmittels kann über eine Füllstandsregelung kontrolliert werden, über welche der Abkühlraum des Reaktors vorzugsweise verfügt.

Der Reaktionsraum und der Abkühlraum des Reaktors sind über ein Gasleitrohr miteinander verbunden. Das Gasleitrohr stellt somit eine Durchführung für das abzukühlende Synthesegas vom Reaktionsraum in den Abkühlraum dar.

Das Gasleitrohr verfügt über einen an den Reaktionsraum angrenzenden Gaseinlassbereich. Der Gaseinlassbereich des Gasleitrohres kann auch als erstes Ende des Gasleitrohres bezeichnet werden. Dieses erste Ende grenzt unmittelbar an den Reaktionsraum an, das Gasleitrohr "sieht" somit zunächst an seinem ersten Ende oder am Gaseinlassbereich das heiße, noch nicht abgekühlte Synthesegas.

Das Gasleitrohr verfügt ferner über einen an den Abkühlraum angrenzenden Gasauslassbereich. Der Gasauslassbereich des Gasauslassrohres kann auch als zweites Ende des Gasleitrohrs bezeichnet werden. Dieses zweite Ende grenzt unmittelbar an den Abkühlraum an. Nach passieren dieses Gasauslassbereichs oder zweiten Endes tritt das vorgekühlte Synthesegas somit in den Abkühlraum des Reaktors ein.

Im Bereich des Gasauslassbereichs oder zweiten Endes des Gasleitrohres ist eine Blende angeordnet. Die Blende ist so eingerichtet, dass diese gegenüber dem Strömungsquerschnitt des Gasleitrohres eine Engstelle definiert, somit im Bereich der Blende der Strömungsquerschnitt des Gasleitrohres vermindert ist. Vorzugsweise vermindert die Blende den Strömungsquerschnitt des Gasleitrohres um einen Faktor von 1,5 bis 16,0, vorzugsweise um einen Faktor von 2,0 bis 7,0.

Eine bevorzugte Ausführung des Reaktors ist dadurch gekennzeichnet, dass zwischen dem Reaktionsraum und dem Abkühlraum ein Zwischenboden angeordnet ist, welcher den Reaktionsraum und den Abkühlraum räumlich voneinander trennt, und sich das Gasleitrohr als Durchführung durch den Zwischenboden hindurch erstreckt.

Bei dem Zwischenboden handelt es sich insbesondere um einen tragenden Zwischenboden, welcher eine räumliche und fluiddichte Trennung zwischen dem Reaktionsraum und dem Abkühlraum definiert. Das Gasleitrohr erstreckt sich vom Reaktionsraum durch den Zwischenboden in den Abkühlraum, und definiert dadurch eine Durchführung für Fluide vom Reaktionsraum in den Abkühlraum.

Eine bevorzugte Ausführung des Reaktors ist dadurch gekennzeichnet, dass der Reaktionsraum den oberen Bereich des Reaktors bildet und der Abkühlraum den unteren Bereich des Reaktors bildet.

Insbesondere ist der Reaktor vertikal derart angeordnet, dass der Durchfluss von Reaktionsmedien und Kühlmedien von oben nach unten erfolgen kann. Insbesondere ist der zumindest eine Brenner und sind die Zuführungen für Brennstoff und Oxidationsmittel in einem Kopfbereich des Reaktors, insbesondere in einem Kopfbereich des Reaktionsraums, angeordnet. Eine solche Anordnung wird auch als von oben befeuert oder *top fired* bezeichnet.

Eine bevorzugte Ausführung des Reaktors ist dadurch gekennzeichnet, dass das Gasleitrohr vertikal angeordnet ist.

Das Gasleitrohr ist vorzugsweise vertikal, oder zumindest im Wesentlichen vertikal angeordnet. Dies erlaubt einen natürlichen, durch Gravitation ermöglichten Fluss von Synthesegas und des Kühlmittels durch das Gasleitrohr.

Eine bevorzugte Ausführung des Reaktors ist dabei dadurch gekennzeichnet, dass das Gasleitrohr in einem unteren Bereich fluidisch mit der Kühlmittelzuführung verbunden ist, so dass der Ringspalt von unten nach oben mit Kühlmittel durchströmbar ist.

Der Ringspalt des Gasleitrohrs ist vorzugsweise im Gasauslassbereich fluidisch mit der Kühlmittelzuführung verbunden. Dadurch ist sichergestellt, dass das Gasleitrohr über die gesamte Länge im Ringspalt von Kühlmittel durchströmt wird. Dadurch wird eine Kühlung des Gasleitrohres über den Fluss durch den Ringspalt ermöglicht.

Insbesondere bei vertikaler Anordnung des Gasleitrohrs ist der Ringspalt vorzugsweise daher in einem unteren Bereich des Gasleitrohres fluidisch mit der Kühlmittelzuführung verbunden, so dass der Ringspalt über die maximale Länge des Gasleitrohres von unten nach oben von Kühlmittel durchströmt werden kann.

Eine bevorzugte Ausführung des Reaktors ist dadurch gekennzeichnet, dass das Leitblech einen parallel zum Innenrohr verlaufenden Bereich aufweist.

Der parallel zum Innenrohr verlaufende Bereich des Leitblechs ist vorzugsweise über ein Ende dieses Bereichs, insbesondere ein oberes Ende dieses Bereichs, oberhalb der Öffnung des Innenrohrs zum Ringspalt mit einer Innenseite des Innenrohrs verbunden. Diese Verbindung kann über ein weiteres Element des Leitblechs, beispielsweise ein im Wesentlichen horizontal verlaufendes Verbindungselement, bewirkt werden.

Vorzugsweise handelt es sich bei den genannten Verbindungen um stoffschlüssige Verbindungen, wie beispielsweise Schweißverbindungen.

Bei vertikaler Anordnung des Gasleitrohrs ist das Leitblech grundsätzlich oberhalb der Öffnung des Innenrohrs zum Ringspalt befestigt, um so einen Fluss des Kühlmittels entlang der Innenseite des Innenrohrs von oben nach unten zu bewirken.

Eine bevorzugte Ausführung des Reaktors ist dadurch gekennzeichnet, dass der Synthesegasauslass seitlich am Abkühlraum des Reaktors angeordnet ist.

Wie bereits erwähnt, kann der Synthesegasauslass auch als Kaltgasauslass bezeichnet werden. Dieser Kaltgasauslass dient dem Ausleiten des abgekühlten Gemischs aus Synthesegas und gasförmigem Kühlmittel, insbesondere Synthesegas und Wasserdampf, aus dem Abkühlraum des Reaktors. Vorzugsweise ist der Synthesegasauslass als im Wesentlichen horizontal verlaufendes Rohr oder als horizontal verlaufendes Rohr angeordnet. Weiter bevorzugt ist das Rohr möglichst weit oben im Bereich des Abkühlraums angeordnet, so dass sich möglichst wenig Synthesegas-Kühlmittel-Gemisch in einem kaum durchströmten Totraum oberhalb des Synthesegasauslasses sammeln kann.

Vorzugsweise ist auch die Kühlmittelzuführung als im Wesentlichen horizontal verlaufendes Rohr oder als horizontal verlaufendes Rohr seitlich am Abkühlraum des Reaktors angeordnet. Gemäß einer Ausführungsform weist die Kühlmittelzuführung eine Neigung auf, insbesondere ein Gefälle vom Randbereich des Abkühlraums in Richtung mittigem Bereich des Abkühlraums. Dabei erstreckt sich die Kühlmittelzuführung insbesondere durch eine Seitenwandung des Abkühlraums des Reaktors.

Weiter bevorzugt ist der Kühlmittelauslass in einem unteren Bereich des Abkühlraums des Reaktors angeordnet.

Vorzugsweise ist der Kühlmittelauslass in einem unteren Bereich oder Sumpfbereich des Abkühlraums des Reaktors angeordnet. Insbesondere erstreckt sich der Kühlmittelauslass durch eine untere Wandung, in der Regel den Boden, des Abkühlraums hindurch. Der Kühlmittelauslass kann dabei in einem zentralen Bereich des Bodens angeordnet sein, oder seitlich versetzt. Bei zentraler Anordnung ist der Kühlmittelauslass vorzugsweise als vertikales Rohr ausgestaltet. Bei seitlich versetzter Anordnung kann der Kühlmittelauslass schräg angeordnet sein.

Oberhalb des Kühlmittelauslasses kann sich überschüssiges Kühlmittel innerhalb des Abkühlraums sammeln. Die Menge dieses überschüssigen Kühlmittels ist über den Füllstand geregelt. Dabei ist bevorzugt, dass der Füllstand stets so kontrolliert wird, dass sich der Füllstand, also die obere Grenze der stehenden Kühlflüssigkeit, niemals oberhalb des Gasauslassbereichs des Gasleitrohres befindet.

Gemäß einer Ausführungsform ist der Reaktor daher so eingerichtet, dass der Abkühlraum über eine Füllstandsregelung für Kühlmittel, insbesondere für überschüssiges Kühlmittel, verfügt, wobei die Füllstandsregelung so eingerichtet ist, dass sich der Füllstand im Betrieb des Reaktors unterhalb des Gasauslassbereichs des Gasleitrohrs befindet.

Der Reaktor ist somit vorzugsweise so eingerichtet, dass der Gasauslassbereich des Gasleitrohrs so angeordnet ist, dass dieser unter Betriebsbedingungen nicht in eine Flüssigkeit, insbesondere nicht in Kühlmittelflüssigkeit, eintaucht. Der Reaktor ist dementsprechend bevorzugt als Reaktor mit Quenchrohr als Kühlsystem eingerichtet, nicht mit einem Tauchrohr (Tauchquenche) als Kühlsystem.

Gemäß einer Ausführungsform kann der Abkühlraum des Reaktors zusätzliche Düsen oder andere geeignete Vorrichtungen zum Einspritzen von Kühlmittel in den Abkühlraum beinhalten, wodurch der Reaktor zusätzlich über ein als Freiquenche zu bezeichnendes Kühlsystem verfügen würde.

Eine bevorzugte Ausführung des Reaktors ist dadurch gekennzeichnet, dass das Kühlmittel Wasser beinhaltet, vorzugsweise aus Wasser besteht.

Eine bevorzugte Ausführungsform des Reaktors ist dadurch gekennzeichnet, dass innerhalb des Ringspalts ein Widerstandselement angeordnet ist, welches einen Druckverlust in Bezug auf die Kühlmittelströmung innerhalb des Ringspalts bewirkt.

Gemäß einem Beispiel handelt es sich beim dem Widerstandselement um einen umlaufenden Ring, vorzugsweise mit Stegen.

Durch die Anordnung eines Widerstandselements innerhalb des Ringspalts wird die Gleichverteilung der Strömung des Kühlmittels innerhalb des Ringspalts verbessert. Mit anderen Worten, die Strömung des Kühlmittels innerhalb des Ringspalts wird dadurch vergleichmäßigt.

Eine bevorzugte Ausführungsform des Reaktors ist dadurch gekennzeichnet, dass das Innenrohr im Gasauslassbereich des Gasleitrohres eine Öffnung zum Ringspalt aufweist, wodurch ein Kühlmittel-Bypass-Strom in den Innenraum des Gasleitrohres ausbildbar ist. Es können auch mehrere solcher Öffnungen vorhanden sein.

Durch eine weitere Öffnung des Innenrohrs im Bereich des Gasauslassbereichs kann ein Kühlmittel-Bypass-Strom erzeugt werden, welcher Ablagerungen im GasauslassBereich des Ringspalts, insbesondere im unteren Bereich des Ringspalts, verhindert. Solche Ablagerungen können sich insbesondere bei ungleichmäßiger Kühlmittel-Zufuhr oder bei einer ungleichmäßigen oder schlechten Kühlung dieses Bereichs bilden.

### Ausführungsbeispiel

Die Erfindung wird im Folgenden durch Zeichnungen genauer dargestellt, wobei die Zeichnungen keine Beschränkung der Erfindung bedeuten. Die Zeichnungen sind nicht maßstabsgetreu.

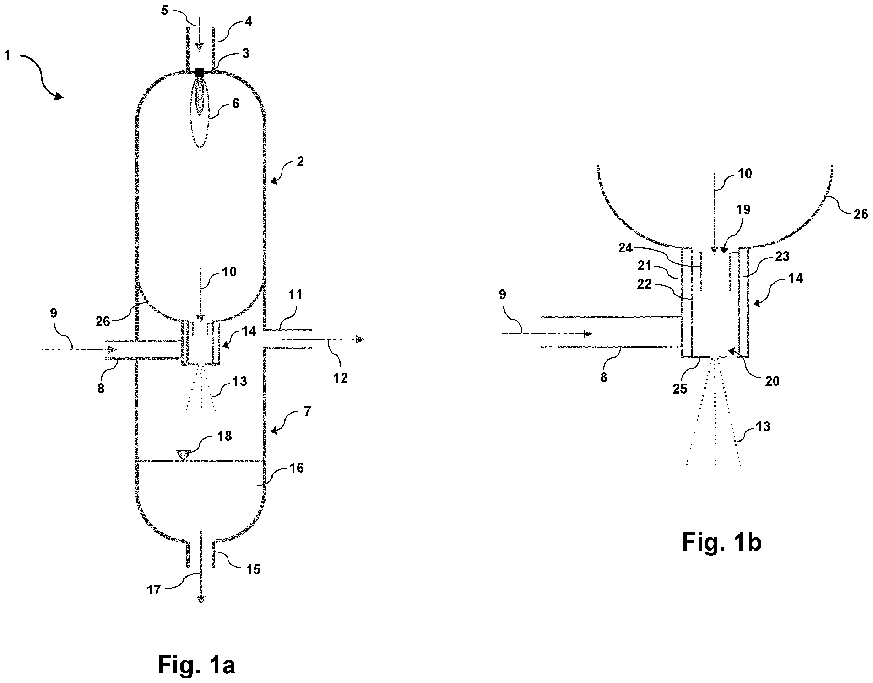

Es zeigt
- Figur 1a: eine Übersichtsdarstellung eines erfindungsgemäßen Reaktors, und
- Figur 1b: eine Detaildarstellung eines Teils des erfindungsgemäßen Reaktors, in welcher die Komponenten des Gasleitrohres vergrößert dargestellt sind.

Figur 1a zeigt einen erfindungsgemäßen Reaktor, welcher zur Erzeugung von Synthesegas durch partielle Oxidation eines Kohlenwasserstoff-Gemischs geeignet ist.

Der Reaktor 1 verfügt über einen oberen Reaktionsraum 2 und einen unteren Abkühlraum 7. Der Reaktionsraum 2 und der Abkühlraum 7 bilden die beiden Hauptbereiche des Reaktors 1. Dabei sind der Reaktionsraum 2 und der Abkühlraum 7 durch einen Zwischenboden 26 voneinander separiert. Ein fluidische Verbindung zwischen dem Reaktionsraum 2 und dem Abkühlraum 7 wird durch ein Gasleitrohr 14 hergestellt, welches den Reaktionsraum 2 und den Abkühlraum 7 miteinander verbindet. Das Gasleitrohr 14 ist dabei als Durchführung durch den Zwischenboden 26 vom Reaktionsraum 2 in den Abkühlraum 7 eingerichtet.

Der Reaktor verfügt über einen Reaktormantel und eine innenseitig hitzeresistente Ausmauerung (im Detail nicht gezeigt), um den Reaktionsbedingungen der partiellen Oxidation standzuhalten.

Der Reaktionsraum 2 verfügt in einem oberen Bereich (Kopfbereich) über eine Zuführung 4 für Brennstoff (Kohlenwasserstoff-Gemisch) und Oxidationsmittel (Sauerstoff oder Luft). Entsprechend durchströmt ein Strom 5 aus Brennstoff und Oxidationsmittel die Zuführung 4. Durch einen Brenner 3, welcher im Betrieb des Reaktors 1 eine nach unten gerichtete Brennerflamme 6 aufweist, wird das Kohlenwasserstoff-gemisch durch partielle Oxidation mit Sauerstoff zu einem Synthesegasgemisch umgesetzt. Der von oben nach unten im Innenraum des Reaktionsraums strömende Synthesegasstrom 10 enthält im Wesentlichen Wasserstoff, Kohlenmonoxid und Kohlendioxid. Andere unerwünschte Nebenprodukte können im Synthesegasstrom 10 enthalten sein. Die Temperatur des Synthesegasstroms 10 kann bei deutlich über 1000 °C liegen.

Zur Abkühlung dieses heißen Synthesegasstroms 10 passiert dieses zunächst ein Gasleitrohr 14, und anschließend den Innenraum des Abkühlraums 7, bevor es den Reaktor 1 über den Synthesegasauslass 11 verlässt und einer weiteren Verarbeitung (zum Beispiel Trocknung und Kohlendioxidabscheidung) unterzogen wird.

Das Gasleitrohr 14 verfügt über ein oberes Ende (erstes Ende), welches an den Reaktionsraum 2, insbesondere den Innenraum des Reaktionsraums 2, angrenzt. Dieses obere Ende des Gasleitrohrs 14 ist der Gaseinlassbereich 19 des Gasleitrohrs 14. Das Gasleitrohr 14 verfügt weiterhin über ein unteres Ende (zweites Ende), welches an den Abkühlraum 7, insbesondere den Innenraum des Abkühlraums 7, angrenzt. Dieses untere Ende des Gasleitrohrs 14 ist der Gasauslassbereich 20 des Gasleitrohrs 14.

Das Gasleitrohr 14, in Figur 1b vergrößert dargestellt, verfügt über ein Außenrohr 21 und ein Innenrohr 22, wodurch zwischen der Wandung des Innenrohrs 22 und des Außenrohrs 21 ein Ringspalt 23 ausgebildet wird. Durch den Ringspalt 23 ist das Gasleitrohr 14 im Bereich des Ringspalts von Kühlmittel durchströmbar. Kühlmittel wird dem Gasleitrohr 14 über eine Kühlmittelzuführung 8 zugeführt. Die Kühlmittelzuführung 8 bildet einen Teil des Abkühlraums 7 und erstreckt sich durch die Seitenwandung des Abkühlraums 7. Die Kühlmittelzuführung 8 ist als Rohr ausgestaltet, dessen Innenraum in Fluidverbindung mit dem Ringspalt 23 steht. Das heißt, das Außenrohr 21 des Gasleitrohrs 14 weist eine Öffnung auf, welche einen Durchgang von der Kühlmittelzuführung 8 zum Ringspalt 23 des Gasleitrohrs 14 ermöglicht (nicht gezeigt). Die Kühlmittelzuführung 8 ist im unteren Bereich oder Gasauslassbereich 20 mit dem Gasleitrohr verbunden, um besagte fluidische Verbindung mit dem Ringspalt 23 auszubilden. Dadurch strömt das Kühlmittel des Kühlmittelstroms 9, zum Beispiel Wasser, zunächst innerhalb des Ringspalts 23 von unten nach oben.

In einem oberen Bereich oder Gaseinlassbereich 19 des Gasleitrohres 14 weist das Innenrohr 22 eine Öffnung zum Ringspalt 23 auf (nicht gezeigt). Mit anderen Worten, das Innenrohr verfügt in diesem Gaseinlassbereich 19 über eine Öffnung, welche eine fluidische Verbindung zwischen dem Raum des Ringspalts 23 und dem Innenraum des Innenrohrs 22 herstellt. Dadurch kann Kühlmittel des Kühlmittelstroms 9 insbesondere auf die Innenseite des Innenrohrs 22 gelangen, wodurch das Gasleitrohr 14 von innen gekühlt wird.

Im Gaseinlassbereich 19 des Gasleitrohres ist im Bereich der Öffnung des Innenrohrs 22 zum Ringspalt 23 ein Leitblech 24 angeordnet. Insbesondere ist das Leitblech 24 stoffschlüssig, beispielsweise über eine Schweißverbindung, mit der Innenseite des Innenrohrs 22 verbunden. Das Leitblech übernimmt dabei die Funktion des Umlenkens des Kühlmittels, nachdem dieses die Öffnung des Ringspalts 23 zum Innenrohr 22 verlassen hat. Das Leitblech 24 weist somit insbesondere die Funktion eines Filmlegers auf, so dass sich entlang der Innenseite des Innenrohrs 22 ein möglichst durchgehender Film aus Kühlmittelflüssigkeit ausbilden kann. Dadurch wird das Innenrohr 22 zusätzlich von innen gekühlt. Ferner wird dadurch verhindert, dass sich auf der Innenseite des Innenrohrs 22 Ablagerungen bilden können.

Der Gasauslassbereich 20 des Gasleitrohres 14 verfügt über eine Blende 25. Die Blende 25 definiert eine Engstelle im Gasauslassbereich 20 des Gasleitrohres 14. Durch die Blende 25 wird der Strömungsquerschnitt des Gasleitrohres 14 im Gasauslassbereich 20 verringert. Dadurch bildet sich ein Kühlmittelspray 13 (dargestellt durch gepunktete Linien) aus, welches für eine effiziente und vollständige Vermengung des abzukühlenden Synthesegases mit dem Kühlmittel sorgt. Dadurch wird der ursprünglich über 1000 °C heiße Synthesegasstrom auf unter 300 °C abgekühlt.

Das abgekühlte Synthesegas wird über den Synthesegasauslass 11 aus dem Reaktor ausgeleitet. Überschüssiges, nicht verdampftes Kühlmittel sammelt sich im Sumpfbereich des Abkühlraums 7. Das sich sammelnde Wasser kann auch als Kühlmittelüberschuss 16 bezeichnet werden, welcher sich im Sumpfbereich des Abkühlraums 7 sammelt. Dieser Kühlmittelüberschuss wird kontinuierlich über den Kühlmittelauslass 15 als Kühlmittelüberschussstrom 17 aus dem Abkühlraum 7 ausgeleitet. Der Füllstand an Kühlmittelüberschuss wird über einen Füllstandsregler 18 so geregelt, dass dieser nicht mit dem Gasauslassbereich 20 des Gasleitrohres 14 in Berührung kommt. Mit anderen Worten, der Füllstand an Kühlmittelüberschuss 16 wird über den Füllstandsregler 18 so geregelt, dass das Gasleitrohr zu keinem Zeitpunkt in das Kühlmittel des Kühlmittelüberschusses 16 eintaucht.

### Liste der Bezugszeichen

- 1: Reaktor
- 2: Reaktionsraum
- 3: Brenner
- 4: Brennstoff- und Oxidationsmittelzuführung
- 5: Strom aus Brennstoff und Oxidationsmittel
- 6: Brennerflamme
- 7: Abkühlraum
- 8: Kühlmittelzuführung
- 9: Kühlmittelstrom
- 10: Heißer Synthesegasstrom
- 11: Synthesegasauslass
- 12: Strom aus abgekühltem Synthesegas und Kühlmittel
- 13: Kühlmittelspray
- 14: Gasleitrohr
- 15: Kühlmittelauslass
- 16: Kühlmittelüberschuss
- 17: Kühlmittelüberschussstrom
- 18: Füllstandregler für Kühlmittelüberschuss
- 19: Gaseinlassbereich des Gasleitrohres
- 20: Gasauslassbereich des Gasleitrohres
- 21: Außenrohr des Gasleitrohres
- 22: Innenrohr des Gasleitrohres
- 23: Ringspalt
- 24: Leitblech
- 25: Blende
- 26: Zwischenboden

## Patentansprüche

1. Reaktor (1) zur Erzeugung von Synthesegas durch partielle Oxidation eines kohlenstoffhaltigen Brennstoffs, umfassend
(a) einen Reaktionsraum (2) mit einem Brenner (3), einer Brennstoffzuführung und einer Oxidationsmittelzuführung (4), zur Erzeugung des Synthesegases aus dem Brennstoff und dem Oxidationsmittel im Reaktionsraum (2);
(b) einen Abkühlraum (7), aufweisend eine Kühlmittelzuführung (8), einen Synthesegasauslass (11), sowie einen Kühlmittelauslass (15), zur Kühlung des Synthesegases durch direkte Kühlung mit einem Kühlmittel;
(c) ein Gasleitrohr (14), welches den Reaktionsraum (2) und den Abkühlraum (7) miteinander verbindet, wobei das Gasleitrohr (14) einen an den Reaktionsraum (2) angrenzenden Gaseinlassbereich (19) und einen an den Abkühlraum angrenzenden Gasauslassbereich (20) aufweist,
**dadurch gekennzeichnet, dass**
das Gasleitrohr (14) ein Innenrohr (22) und ein Außenrohr (21) aufweist, wodurch zwischen dem Innenrohr (22) und dem Außenrohr (21) ein Ringspalt (23) ausgebildet wird, wobei der Ringspalt (23) fluidisch mit der Kühlmittelzuführung (8) verbunden ist, so dass dieser mit Kühlmittel durchströmbar ist, und
das Innenrohr (22) im Gaseinlassbereich (19) des Gasleitrohrs (14) eine Öffnung zum Ringspalt (23) aufweist, und im Bereich dieser Öffnung ein Leitblech (24) angeordnet ist, so dass auf der Innenseite des Innenrohrs (22) ein Flüssigkeitsfilm aus Kühlmittel erzeugbar ist, und
im Gasauslassbereich (20) des Gasleitrohrs (14) eine Blende (25) angeordnet ist, so dass innerhalb des Abkühlraums (7) ein Spray (13) aus Kühlmittel erzeugbar ist.

2. Reaktor nach Anspruch 1, **dadurch gekennzeichnet, dass** zwischen dem Reaktionsraum (2) und dem Abkühlraum (7) ein Zwischenboden (26) angeordnet ist, welcher den Reaktionsraum (2) und den Abkühlraum (7) räumlich voneinander trennt, und sich das Gasleitrohr (14) als Durchführung durch den Zwischenboden (26) hindurch erstreckt.

3. Reaktor nach einem der vorherigen Ansprüche, **dadurch gekennzeichnet, dass** der Reaktionsraum (2) den oberen Bereich des Reaktors (1) bildet und der Abkühlraum (7) den unteren Bereich des Reaktors bildet.

4. Reaktor nach Anspruch 3, **dadurch gekennzeichnet, dass** das Gasleitrohr (14) vertikal angeordnet ist.

5. Reaktor nach Anspruch 4, **dadurch gekennzeichnet, dass** das Gasleitrohr (14) in einem unteren Bereich fluidisch mit der Kühlmittelzuführung (8) verbunden ist, so dass der Ringspalt (23) von unten nach oben mit Kühlmittel durchströmbar ist.

6. Reaktor nach einem der vorherigen Ansprüche, **dadurch gekennzeichnet, dass** das Leitblech (24) einen parallel zum Innenrohr (22) verlaufenden Bereich aufweist.

7. Reaktor nach einem der vorherigen Ansprüche, **dadurch gekennzeichnet, dass** der Abkühlraum (7) über eine Füllstandsregelung (18) für Kühlmittel, insbesondere für überschüssiges Kühlmittel, verfügt, wobei die Füllstandsregelung (18) so eingerichtet ist, dass sich der Füllstand im Betrieb des Reaktors (1) unterhalb des Gasauslassbereichs (20) des Gasleitrohrs (14) befindet.

8. Reaktor nach einem der vorherigen Ansprüche, **dadurch gekennzeichnet, dass** das Kühlmittel Wasser beinhaltet, vorzugsweise aus Wasser besteht.

9. Reaktor nach einem der vorherigen Ansprüche, **dadurch gekennzeichnet, dass** innerhalb des Ringspalts (23) ein Widerstandselement angeordnet ist, welches einen Druckverlust in Bezug auf die Kühlmittelströmung innerhalb des Ringspalts (23) bewirkt.

10. Reaktor nach einem der vorherigen Ansprüche, **dadurch gekennzeichnet, dass** das Innenrohr (22) im Gasauslassbereich (20) des Gasleitrohres (14) eine Öffnung zum Ringspalt (23) aufweist, wodurch ein Kühlmittel-Bypass-Strom in den Innenraum des Gasleitrohres (14) ausbildbar ist.
